# FASCICULE DE BREVET EUROPEEN

(11) **EP 3 649 821 B1**
(45) Date de publication et mention de la délivrance du brevet: **16.03.2022**
(21) Numéro de dépôt: 18749449.7
(22) Date de dépôt: 22.06.2018
(51) Int. Cl.: H04W 72/12, H04L 12/927

(54) **PARTAGE DE RESSOURCES RADIO POUR DES SERVEURS DE CONTENU**
RADIO-RESSOURCEN FÜR CONTENT-SERVER TEILEN
SHARING RADIO RESOURCES FOR CONTENT SERVERS

(30) Priorité: 06.07.2017 FR 1756374
(43) Date de publication de la demande: 13.05.2020
(73) Titulaire: ORANGE, 92130 Issy-les-Moulineaux (FR)
(72) Inventeur: CHADLI, Youssef, 92326 Châtillon Cedex (FR); MARECHAL, Adrien, 92326 Châtillon Cedex (FR); FIEAU, Frédéric, 92326 Châtillon Cedex (FR); EN-NAJJARY, Taoufik, 92326 Châtillon Cedex (FR)
(86) Numéro de dépôt international: PCT/FR2018/051528
(87) Numéro de publication internationale: WO 2019/008248

(56) Documents cités:
- FR-A1- 2 900 529
- FR-A1- 3 023 108
- US-A1- 2011 149 879

## Description

### 1. Domaine de l'invention

L'invention se situe dans le domaine de la transmission de données au travers des réseaux mobiles en mode paquet, par exemple de celui de la transmission de contenus multimédia provenant de fournisseurs différents vers des terminaux mobiles connectés à un réseau d'accès 3G, 4G, ou 5G.

### 2. Etat de la technique antérieure

Le trafic vidéo représente jusqu'à 70% du trafic total sur les réseaux mobiles. L'utilisation de ce que l'on nomme le réseau d'accès mobile, dont l'utilisation des fréquences et des antennes par exemple, représente quant à elle plus de 80% des coûts du réseau mobile.

Lorsqu'un utilisateur souhaite consommer un contenu sur son terminal mobile, ce contenu est sur un serveur de contenu, par exemple un serveur de cache, qui est contrôlé par un fournisseur de contenus.

Actuellement, le serveur de contenu envoie alors le contenu demandé découpé en morceaux qu'il estime que le réseau d'accès mobile sera en mesure de livrer jusqu'au terminal mobile. Le terme morceau désigne une des parties d'un flux, de taille variable ou constante; le flux est reconstitué lorsque tous les morceaux sont reçus correctement par une application tournant sur le terminal. Ceci n'est pas satisfaisant car le serveur de contenu n'a aucune assurance que le réseau d'accès sera effectivement en mesure de livrer chacun des morceaux dans un temps acceptable. En effet, il faut aussi que les morceaux arrivent au terminal avant que l'application sur le terminal, par exemple un lecteur ("player" en anglais) de contenu multimédia, par exemple une vidéo, ne demande à les consommer ; cela créée sinon un blocage de la vidéo sur le lecteur, situation appelée famine.

Pour cette raison, il a été imaginé que le serveur de contenu puisse réserver des ressources radio auprès d'un élément de réseau de l'opérateur mobile. Par exemple pour le réseau LTE (technologie mobile dite 4G), le 3GPP a défini dans le document TS36.213 plusieurs classes de service dites CQI (Channel Quality Indicator, indicateur de qualité de canal, en anglais). A chaque CQI sont associés des garanties en termes de transmission des données (délai, priorité, taux d'erreur, etc.). Ainsi, il est possible d'associer à un flux (identifié par ses adresses d'origine et de destination) un CQI auquel est associé un débit plus ou moins garanti. Ainsi, le serveur de contenu peut, pour chacun de ses flux, réserver une classe de service CQI, ce qui revient à réserver un débit dont il a besoin afin que le contenu soit reçu par le terminal en respectant une certaine qualité de service. Des exemples se trouvent dans US 2011/149879 et FR 2900529.

L'application des paramètres de qualité s'applique par flux. Le trafic de données associé à un flux se verra donc appliqué le même traitement pour tous les morceaux du flux, alors que les conditions impactant la qualité varient dans le temps même pour des contenus non-temps réel.

Les utilisateurs d'un même réseau d'accès mobile demandent leurs contenus indépendamment les uns des autres, et il n'est pas envisageable que les fournisseurs de contenu acceptent de se concerter entre eux lorsqu'ils réservent des débits auprès d'un réseau d'accès radio, pour des raisons commerciales et de complexité de mise en œ uvre d'une telle concertation. Il en résulte une consommation sous-optimale des ressources radio du réseau d'accès mobile, entre autre parce que les fournisseurs de contenus ne partagent, ni entre eux, ni avec les opérateurs de réseaux d'accès mobile, les informations qu'ils détiennent sur leurs utilisateurs et la façon dont ceux-ci consomment leurs contenus.

Un des buts de l'invention est de remédier à ces inconvénients de l'état de la technique.

### 3. Exposé de l'invention

L'invention vient améliorer la situation à l'aide d'un procédé de réservation de blocs de ressource physique d'un réseau d'accès mobile, mis en œuvre par un serveur de contenu configuré pour émettre un flux de données demandé par un terminal connecté au réseau d'accès mobile avec un niveau de qualité déterminé, le procédé comprenant :
- détermination d'une valeur d'un nombre de blocs à réserver, en fonction de paramètres liés au flux de données, du niveau de qualité déterminé et d'un coût unitaire par bloc.
- émission d'une première demande de réservation de blocs de ressource, comprenant la valeur déterminée du nombre de blocs à réserver, vers une entité de contrôle du réseau d'accès mobile,
- réception d'une réponse d'allocation de blocs de ressource en provenance de l'entité de contrôle, comprenant une valeur d'un nombre de blocs alloués au serveur de contenu.

L'unité de base des ressources radio utilisées par une antenne de radiocommunications pour envoyer ou recevoir des données correspond à une bande de fréquence disponible sur un intervalle de temps, et est appelée bloc de ressource physique (physical resource block, en anglais), ou plus simplement "RB". C'est principalement l'utilisation des RB qui génère les coûts du réseau d'accès mobile.

Il est plus facile pour un contrôleur d'antenne de garantir, pour un flux de données, l'allocation d'un nombre de RBs, qui sont les unités de base incompressibles de la transmission radio, que l'allocation d'une bande passante, ou débit, qui est susceptible de varier en fonction de conditions qui ne sont pas toujours sous le contrôle du réseau d'accès mobile ou de l'antenne.

Avantageusement, grâce au procédé de réservation proposé, un serveur de contenu peut réserver une quantité de RB, plutôt qu'une promesse de débit, comme dans la technique antérieure.

Le serveur de contenu connait les caractéristiques du flux demandé par le terminal, c'est-à-dire le débit nécessaire et le volume total des données du flux, ainsi que la qualité du canal utilisé par le terminal consommateur du flux, c'est-à-dire le paramètre CQI. La détermination du nombre de blocs en fonction du débit et du CQI peut être par exemple réalisée par consultation de tables de correspondance propres aux fabricants d'antennes.

Selon un aspect du procédé de réservation, la détermination d'une valeur d'un nombre de blocs à réserver est faite aussi en fonction d'un coût unitaire par bloc.

Grâce à cet aspect, un serveur de contenu connaissant le prix à payer par RB est incité à la modération dans une demande de réservation de RBs.

Selon un aspect du procédé de réservation, il comprend, préalablement à la réception de la réponse d'allocation :
- réception d'une réponse de réservation en provenance de l'entité de contrôle, comprenant un paramètre relatif à un coût unitaire d'un bloc,
- émission d'une deuxième demande de réservation de blocs de ressource, comprenant une valeur révisée du nombre de blocs à réserver, déterminée au moins en fonction du coût unitaire.

Grâce à cet aspect, un serveur de contenu peut obtenir le prix à payer par RB directement de l'entité de contrôle auprès de laquelle il a fait sa demande de réservation de RBs, et réviser le nombre de RB qu'il souhaite réserver. Cette entité de contrôle connait les demandes des autres serveurs de contenu, pour un même intervalle de temps, et peut ajuster le prix en fonction d'un équilibre recherché entre l'offre, c'est-à-dire le total des RB disponibles, et la demande, c'est-à-dire le nombre total de RBs dont la réservation est demandée par des serveurs de contenu.

L'invention vient améliorer la situation également à l'aide d'un procédé d'allocation de blocs de ressource physique d'un réseau d'accès mobile, pour une pluralité de serveurs de contenu configurés pour émettre des flux de données vers des terminaux connectés au réseau d'accès mobile, le procédé comprenant :
- réception de demandes de réservation de blocs, pour lesquels un coût unitaire par bloc est déterminé, en provenance de la pluralité de serveurs de contenu, une première demande d'un serveur de contenu comprenant une valeur d'un nombre de blocs demandés par ce serveur de contenu,
- calcul d'un écart entre un nombre de blocs disponibles dans le réseau d'accès mobile, et le total des nombres de blocs demandés,
ajustement du coût unitaire en fonction de l'écart,
- détermination, au moins en fonction de l'écart, de valeurs de nombres de blocs alloués aux serveurs de contenus,
- émission de réponses d'allocation de blocs vers la pluralité de serveurs de contenus, une réponse d'allocation à un serveur de contenu comprenant la valeur du nombre de blocs qui sont alloués à ce serveur de contenu.

Avantageusement, grâce au procédé d'allocation proposé, l'entité de contrôle, un serveur de type MEC par exemple, recevant des demandes de ressources radio de la part des serveurs de contenu peut allouer précisément des RB, plutôt que, comme dans la technique antérieure, des débits qui sont susceptibles de varier en fonction de conditions qui ne sont pas toujours sous le contrôle du réseau d'accès mobile, de l'antenne, ou de l'entité de contrôle du réseau d'accès mobile.

Selon un aspect du procédé d'allocation, un coût unitaire par bloc est déterminé, et le procédé comprend en outre, préalablement à la réception de demandes de réservation
- émission de réponses de réservation vers la pluralité de serveurs de contenu, comprenant une information relative au coût unitaire,

Lorsqu'une entité de contrôle d'un réseau d'accès mobile reçoit, pour sa zone, c'est-à-dire par exemple pour une cellule couverte par son ou ses antennes, des demandes de réservation pour un nombre total de RB supérieur à ce qui est disponible pour l'intervalle de temps visé par toutes les demandes, le réseau n'alloue pas immédiatement aux serveurs de contenu demandeurs des RB par approximation, en tentant d'approcher au mieux possible la demande, comme cela est fait dans la technique antérieure. Au lieu de cela, le réseau n'alloue pas immédiatement de ressources et répond aux demandeurs avec un prix unitaire de RB modifié, et attend une deuxième réponse de réservation, dans un cycle d'ajustement.

Si la ressource demandée est rare, c'est-à-dire si la demande excède l'offre, le prix unitaire de la ressource est augmenté par le réseau, par rapport au prix courant préalablement connu des demandeurs. De cette manière, les serveurs de contenu peuvent par la suite émettre une deuxième demande de réservation en connaissance du prix unitaire révisé.

Comme un serveur de contenu connait des caractéristiques propres à son utilisateurs et/ou au contenu que cet utilisateur demande, il pourra ajuster sa demande de réservation en fonction de l'importance qu'il accorde à cette demande de contenu. Avec un coût unitaire augmenté, il aura tendance à diminuer le nombre de RB qu'il souhaite réserver, sauf si l'importance accordée est grande. Les autres serveurs de contenu qui sont en compétition pour les mêmes ressources sur le même intervalle de temps auront le même comportement, ce qui aura pour résultat de modérer le nombre total de RB demandés, et ainsi de diminuer l'écart entre ce total et le nombre de RB disponibles.

Ce cycle d'ajustement, qui peut être vu comme un cycle de négociation entre offreur et demandeurs, peut être répété autant de fois qu'il faut afin que cet écart disparaisse, ou s'arrêter lorsqu'une limite de temps est atteinte, afin de ne pas induire de retard dans la livraison des contenus.

Si la ressource devient abondante, c'est-à-dire si l'offre excède la demande, le prix unitaire de la ressource est diminué par le réseau, par rapport au prix courant préalablement connu des demandeurs. De cette manière, les serveurs de contenu pourront revoir à la hausse leurs demandes de réservation respectives, ce qui permettra au réseau de distribuer toutes ses ressources.

Le procédé proposé s'applique quelle que soit l'échelle du réseau d'accès mobile. Par simplicité, "réseau d'accès mobile" est limité ici à une cellule à titre d'exemple, mais le même principe peut être appliqué à n'importe quelle échelle, que ce soit à l'échelle d'une seule cellule 4G ou 5G, à l'échelle de l'ensemble des toutes les cellules d'un opérateur mobile national, ou à tout autre échelle intermédiaire.

Après un ou plusieurs cycles d'ajustement du coût unitaire d'un RB, lorsque l'écart entre offre et demande est devenu inférieur à un seuil, ou lorsqu'une limite de temps écoulé depuis la toute première demande de réservation est atteinte, le réseau alloue les RB aux différents serveurs de contenu. Le réseau peut attribuer les RB en cherchant à s'approcher le plus possible de la demande. Si l'écart n'est pas nul, le réseau peut le réduire à zéro en augmentant ou diminuant proportionnellement toutes les demandes de ressources.

Le procédé de réservation qui vient d'être décrit, combiné au procédé d'allocation qui vient d'être décrit, contribuent ensemble à faire converger offre et demande de ressources radio dans un système impliquant un opérateur de réseau d'accès mobile et des fournisseurs de contenu, sans qu'ils ne doivent partager plus d'informations concernant leurs utilisateurs et/ou les contenus demandés, comparé aux techniques antérieures où offre et demande ne convergent pas.

L'invention concerne aussi un dispositif de réservation de blocs de ressource physique d'un réseau d'accès mobile, compris dans un serveur de contenu configuré pour émettre un flux de données demandé par un terminal connecté au réseau d'accès mobile avec un niveau de qualité déterminé, le dispositif comprenant :
- un module de détermination d'une valeur d'un nombre de blocs à réserver, en fonction de paramètres liés au flux de données, du niveau de qualité déterminé et d'un coût unitaire par bloc,
- un émetteur d'une première demande de réservation de blocs de ressource, comprenant la valeur déterminée du nombre de blocs, vers une entité de contrôle du réseau d'accès mobile,
- un récepteur d'une réponse d'allocation de blocs de ressource en provenance de l'entité de contrôle, comprenant une valeur d'un nombre de blocs alloués au serveur de contenu.

Selon un aspect du dispositif de réservation, le module de détermination est également apte à, et configuré pour prendre en compte un coût unitaire par bloc de ressource, le récepteur est également apte à, et configuré pour recevoir une réponse de réservation, comprenant un paramètre relatif au coût unitaire, et l'émetteur est également apte à, et configuré pour émettre une deuxième demande de réservation de blocs de ressource, comprenant une valeur révisée d'un nombre de blocs à réserver, déterminé au moins en fonction du coût unitaire.

Ce dispositif, apte à mettre en œuvre dans tous ses modes de réalisation le procédé de réservation qui vient d'être décrit, est destiné à être mis en œuvre dans un serveur de contenu, ou serveur de cache, ou tout autre entité apte à émettre un flux de données multimédia vers un terminal mobile.

L'invention concerne de même un dispositif d'allocation de blocs de ressource physique d'un réseau d'accès mobile, pour une pluralité de serveurs de contenu configurés pour émettre des flux de données vers des terminaux connectés au réseau d'accès mobile, le dispositif comprenant :
- un récepteur de demandes de réservation de blocs, en provenance de la pluralité de serveurs de contenu, une demande d'un serveur de contenu comprenant une valeur d'un nombre de blocs demandés par ce serveur de contenu,
- un module de calcul d'un écart entre un nombre de blocs disponibles dans le réseau d'accès mobile, et le total des nombres de blocs demandés,
un module d'ajustement du coût unitaire en fonction de l'écart calculé
- un module de détermination, au moins en fonction de l'écart, de valeurs de nombres de blocs alloués aux serveurs de contenus,
- un émetteur de réponses d'allocation de blocs vers la pluralité de serveurs de contenus, une réponse d'allocation à un serveur de contenu comprenant la valeur du nombre de blocs qui sont alloués à ce serveur de contenu.

Selon un aspect du dispositif d'allocation, il comprend en outre un module d'ajustement du coût unitaire en fonction de l'écart calculé, l'émetteur étant en outre apte à émettre des réponses de réservation vers la pluralité de serveurs de contenu, comprenant une information relative au coût unitaire, et le récepteur étant apte à recevoir des deuxièmes demandes de réservation de blocs, en provenance de la pluralité de serveurs de contenus, une deuxième demande d'un serveur de contenu comprenant un nombre révisé de blocs demandés par ce serveur de contenu.

Ce dispositif d'allocation, apte à mettre en œuvre dans tous ses modes de réalisation le procédé d'allocation qui vient d'être décrit, est destiné à être mis en œuvre dans une entité ou serveur de contrôle en contact avec le réseau d'accès mobile, apte à gérer le trafic vers des terminaux mobiles, ainsi qu'à accéder à des informations en temps réel sur le fonctionnement de la partie radio d'une station de base du réseau d'accès mobile.

L'invention concerne encore un système de partage de blocs de ressource physique d'un réseau d'accès mobile, comprenant au moins deux dispositifs de réservation conforme à celui qui vient d'être décrit, et un dispositif d'allocation conforme à celui qui vient d'être décrit, le dispositif d'allocation étant connecté aux dispositifs de réservation et à une station de base.

L'invention concerne aussi un programme d'ordinateur, comprenant des instructions pour la mise en œuvre des étapes du procédé de réservation de blocs de ressource physique d'un réseau d'accès mobile qui vient d'être décrit, lorsque ce programme est exécuté par un processeur.

L'invention vise aussi un support d'informations lisible par un serveur de contenu, et comportant des instructions d'un programme d'ordinateur tel que mentionné ci-dessus.

L'invention concerne aussi un programme d'ordinateur, comprenant des instructions pour la mise en œuvre des étapes du procédé d'allocation de blocs de ressource physique d'un réseau d'accès mobile qui vient d'être décrit, lorsque ce programme est exécuté par un processeur.

L'invention vise aussi un support d'informations lisible par un serveur de contrôle connecté à une station de base, et comportant des instructions d'un programme d'ordinateur tel que mentionné ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les supports d'informations peuvent être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, un support d'informations peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, un support d'informations peut être un circuit intégré dans lequel un programme est incorporé, le circuit étant adapté pour exécuter ou pour être utilisé dans l'exécution des procédés en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 illustre une configuration d'un réseau d'accès mobile du type cellulaire et les interactions entre entités d'un tel réseau lors de l'accès de deux terminaux utilisateur à des contenus multimédia sur deux serveurs de contenu, selon un mode de réalisation de l'invention ;
- la figure 2 illustre les étapes d'une méthode de réservation et d'une méthode d'allocation de blocs de ressource physique d'un réseau d'accès mobile, selon plusieurs modes de réalisation de l'invention ;
- la figure 3 illustre un exemple de structure de dispositif de réservation de blocs de ressource physique d'un réseau d'accès mobile, selon différents modes de réalisation de l'invention ;
- la figure 4 illustre un exemple de structure de dispositif de d'allocation de blocs de ressource physique d'un réseau d'accès mobile, selon différents modes de réalisation de l'invention.

### 5. Description détaillée d'au moins un mode de réalisation de l'invention

Dans la suite de la description, on présente des exemples de plusieurs modes de réalisation de l'invention se basant sur la technologie dite MEC (pour "Mobile Edge Computing" en anglais), en cours de standardisation auprès de l'ETSI (pour "European Telecommunications Standards Institute" en anglais), mais l'invention s'applique également à d'autres architectures de réseau d'accès mobile.

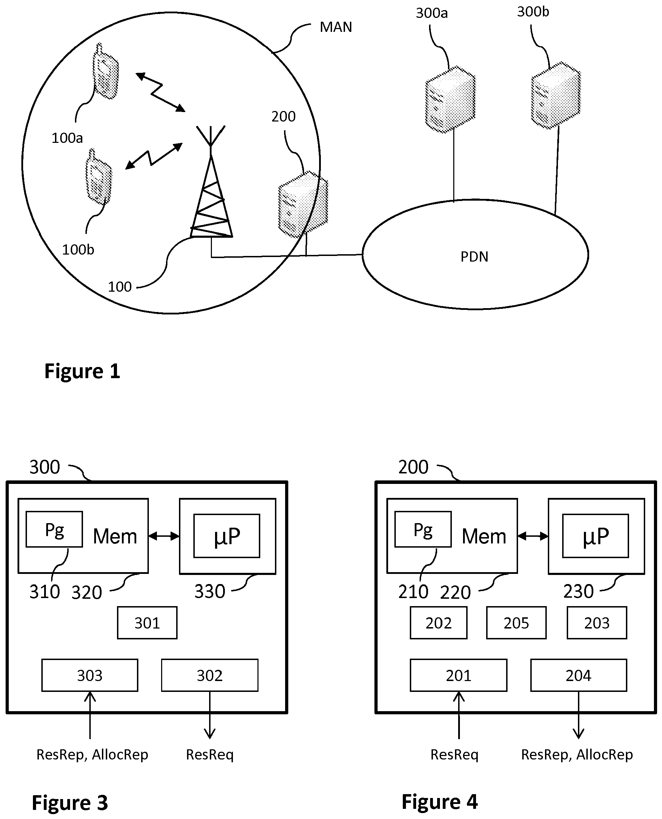

La **figure 1** illustre une configuration d'un réseau d'accès mobile du type cellulaire et les interactions entre entités d'un tel réseau lors de l'accès de deux terminaux utilisateur à des contenus multimédia sur deux serveurs de contenu, selon un mode de réalisation de l'invention.

La technologie d'informatique de bord (ou bordure ou périphérie) de réseau cellulaire, technologie MEC offre la possibilité de tirer parti d'une localisation en bord de réseau cellulaire pour optimiser des applications dédiées aux utilisateurs d'un tel réseau cellulaire. Il apparaît ainsi que la technologie MEC pourrait être adaptée aux diverses problématiques de la diffusion de contenus multimédia dans un réseau cellulaire et dans un environnement multiutilisateurs.

Le serveur de contrôle 200 est un tel serveur de type MEC et est localisé entre le réseau PDN et la station de base 100 qui gère la partie radio du réseau cellulaire MAN (ou réseau d'accès mobile, par généralisation). Sa situation permet au serveur de contrôle 200 de gérer le trafic de, et vers, les terminaux mobiles 100a et 100b d'utilisateurs, ainsi que d'accéder à des informations en temps réel sur le fonctionnement de la partie radio du réseau. Un dispositif d'allocation de blocs de ressource physique d'un réseau d'accès mobile mettant en œuvre la technique décrite est compris dans le serveur de contrôle 200. La station de base 100 est par exemple un eNodeB de la technologie mobile 4G. Le réseau PDN est par exemple le réseau cœur de l'opérateur du réseau cellulaire, ou le réseau Internet, ou englobe les deux à la fois.

Les contenus multimédia demandés respectivement par les terminaux 100a et 100b sont hébergés par les serveurs de contenus 300a et 300b. Les serveurs 300a et 300b, sont par exemple des serveurs dit de cache, sur lesquels les demandes de contenu sont redirigées par d'autres serveurs plus en amont et directement sollicités par les terminaux mobiles demandeurs. Un serveur de contenu ou cache émet un contenu multimédia demandé vers un terminal demandeur sous forme de flux de données, coupé en morceaux successifs dont la taille est variable et déterminée selon plusieurs critères, tels que la taille de la mémoire tampon du terminal, et également les caractéristiques radio du réseau d'accès mobile MAN.

La façon dont est indirectement déterminée la taille des morceaux fait l'objet des méthodes de réservation et d'allocation de blocs proposées ci-après. Par simplicité, les exemples de mode de réalisation sont présentés sur la base de 2 terminaux mobiles 100a et 100b, et de 2 serveurs 300a et 300b, mais les méthodes proposées s'appliquent à un nombre quelconque de serveurs de contenus distincts servant au moins autant de terminaux distincts, un serveur de contenu pouvant servir plus d'un terminal.

Par simplicité également, le sens donné à "terminal" est le même que "logiciel client du terminal". Dans ce document, plusieurs logiciels clients tournant sur le même terminal physique sont à considérer comme autant de terminaux, s'ils reçoivent des flux de la part de serveurs de contenu différents.

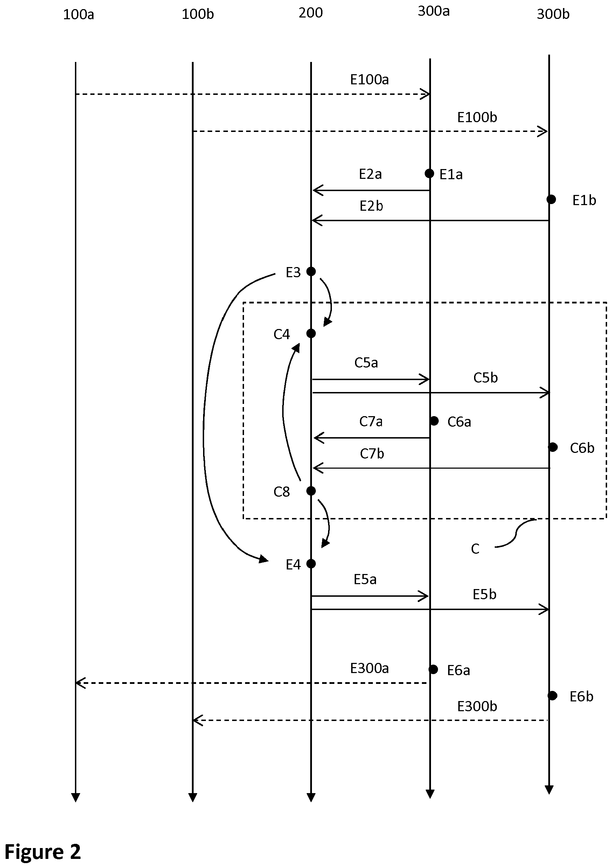

La **figure 2** illustre les étapes d'une méthode de réservation et d'une méthode d'allocation de blocs de ressource physique d'un réseau d'accès mobile, selon plusieurs modes de réalisation de l'invention.

Lors d'une étape E100a connue, une requête pour un contenu multimédia émanant du terminal 100a est reçue par le serveur de contenu 300a, de façon directe ou indirecte via un serveur de tête de réseau, ou via un serveur de référencement de contenu, par exemple. En plus d'un identifiant du contenu demandé qui permet au serveur de contenu d'en connaitre des caractéristiques telles que son volume total, son ou ses types d'encodage, sa catégorie (publicité, clip musical, etc.), cette requête peut également comprendre un ou plusieurs paramètres caractéristiques du terminal 100a et de sa connexion au réseau d'accès mobile, tels que par exemple un CQI (Channel Quality Indicator, ou indicateur de qualité de canal, en anglais), un état de remplissage d'une mémoire tampon. Le serveur de contenu 300a peut aussi déduire l'état de remplissage de la mémoire tampon à partir d'un décompte des morceaux de flux déjà émis.

De façon similaire, lors d'une étape E100b connue, une requête pour un contenu multimédia émanant du terminal 100b est reçue par le serveur de contenu 300b.

Il est supposé que les serveurs de contenu 300a et 300b sont gérés par des fournisseurs de contenus indépendants l'un de l'autre, et ne partageant aucune information sur leurs utilisateurs ou les contenus qu'ils demandent.

Lors d'une étape E1a, le serveur de contenu 300a détermine un nombre N0a de blocs, appelés RBs, à réserver auprès du serveur de contrôle 200, en fonction de paramètres liés au contenu demandé, c'est-à-dire liés au flux de données nécessaire à mettre en œuvre pour livrer ce contenu, et en fonction de paramètres liés au terminal, c'est-à-dire liés à un niveau de qualité compatible avec les conditions du terminal 100a et de sa liaison radio avec le réseau d'accès mobile MAN.

Connaissant la technologie radio utilisée, par exemple LTE, le CQI du terminal, la bande passante du canal utilisée (LTE channel bandwidth) et la correspondance entre le CQI et le nombre de bits par milliseconde, ainsi que le type de MIMO utilisé, le serveur peut déduire la consommation instantanée du terminal en RB par kilo octet.

Le CQI change dans le temps en fonction de plusieurs paramètres : distance du terminal par rapport à la station, interférences, présence d'obstacles à la propagation (pluie, arbre, etc.), le paramètre le plus impactant étant la distance entre le terminal et la station de base 100. Cette information peut être remontée régulièrement par le terminal ce qui suppose une confiance de la part du fournisseur de contenu, ou être fournie par le serveur 200.

La technologie radio utilisée est une information fournie par le terminal.

La bande passante du canal correspond à la taille de la bande de fréquences utilisée par la station, octroyée à l'opérateur du réseau d'accès mobile. Elle permet de connaître la division en nombre de RBs. Il s'agit d'une information statique fournie aux serveurs de contenu 300a et 300b lors d'une phase d'initialisation.

La correspondance entre le CQI et le "TBS" (Transport Block Size, c'est-à-dire le nombre de bits émis par ms) dépend de l'équipement que la station de base 100 utilise. Cette information qui n'est pas statique est connue du serveur de contrôle 200 et peut être transmise au serveurs de contenu 300a et 300b de façon dynamique au cours du temps. Le TBS dépend également de la bande passante du canal. A un CQI et une bande passante correspond un TBS.

Le MIMO utilisé, 2x2 ou 4x4 par exemple, dépend de l'équipement que la station de base utilise. Cette information peut être fournie par le serveur de contrôle 200 aux serveurs de contenu 300a et 300b à l'initialisation.

Par exemple, supposant:
- une bande passante du canal de 20 MHZ, divisée en 100 RB (par intervalle de temps)
- un CQI = 15 correspondant à un TBS = 75376 bits par ms.
- un MIMO 2x2,
100 RB permettent l'envoi de 75376 x 2 (MIMO 2x2 utilisé) bits, c'est à dire 150752 bits. La capacité de 1 RB est donc de 1507 bits.

Donc, si lors de l'étape E1a, le serveur de contenu 300a a déterminé qu'il souhaite transmettre au terminal 100a un morceau de flux dont le volume est de 0,9 Mo, le nombre N0a de RBs qu'il doit réserver dans ces conditions est de 600.

De façon similaire, lors d'une étape E1b, le serveur de contenu 300b détermine aussi un nombre de blocs RB à réserver auprès du serveur de contrôle 200, dont la valeur est N0b.

Lors d'une étape E2a, le serveur de contenu 300a émet une première demande de réservation pour un nombre de blocs égal à N0a, à destination du serveur de contrôle 200. Cette demande peut être transportée dans un message utilisant un protocole quelconque, par exemple une requête http avec un corps XML comprenant un paramètre <requested RB>.

Lors d'une étape E2b, le serveur de contenu 300b émet une première demande de réservation pour un nombre de blocs égal à N0b, aussi à destination du serveur de contrôle 200. On comprend que ces deux premières demandes de réservation sont faites par les serveurs de contenu 300a et 300b sans concertation l'un avec l'autre, et sans connaissance du nombre total de blocs dont dispose le serveur de contrôle 200 pour satisfaire leurs demandes respectives de réservation.

Le serveur de contrôle 200 connait, pour tout intervalle de temps, le nombre de blocs RB disponibles, Ndis, pour l'émission de données par voie radio électrique à partir de la station de base 100 vers tous les terminaux mobiles attachés à la station de base et ayant fait des réservations de ressource, c'est-à-dire, dans notre exemple simplifié, le nombre de blocs disponibles pour l'émission de données de la station de base 100 vers les 2 terminaux 100a et 100b.

Lors d'une étape E3, le serveur de contrôle 200 calcule un écart entre Ndis, le nombre de blocs disponibles, et la somme des blocs demandés en réservation, c'est-à-dire N0a+N0b.

Si cet écart est petit, par exemple inférieur ou égal à un seuil S déterminé, le serveur de contrôle 200 décide, lors d'une étape E4, d'allouer à chacun des serveurs de contenu 300a et 300b un nombre proche ou égal aux nombres de blocs RB qu'ils ont demandés (respectivement N0a et N0b). Si l'écart est grand mais que l'offre est supérieure à la demande, le serveur de contrôle 200 fait de même.

Si l'écart est grand, par exemple supérieur au seuil S, et si l'offre est inférieure à la demande, le serveur de contrôle 200 décide alors d'entrer dans un cycle C de négociation avec les terminaux demandeurs 100a et 100b, dont le but est de réduire l'écart entre l'offre (le nombre de blocs disponibles, Ndis) et la demande (le nombre de blocs demandés, N0a+N0b).

Au moins un cycle C de négociation peut être nécessaire pour faire converger offre et demande, et un seul sera décrit. Les étapes du cycle C de négociation sont indiquées par une lettre C suivie d'autres caractères.

Lors d'une étape C4, comme la demande est supérieure à l'offre, le serveur de contrôle 200 décide de modifier le coût d'utilisation des blocs RB par les terminaux. Initialement, ce coût peut être inexistant, ou d'une valeur connue des terminaux. Par simplicité, il est considéré que, en dehors du cycle C, le coût unitaire du RB est standard et constant ou ne change pas assez fréquemment pour avoir un impact sur les demandes de réservation faites par les serveurs de contenu lors des étapes précédentes E2a et E2b.

Lors d'une étape C5a, le serveur de contrôle 200 émet donc une réponse de réservation vers le serveur de contenu 300a, non pas pour lui indiquer que sa demande est satisfaite, ou pour lui indiquer le nombre de RB qui lui est alloué, mais pour lui fournir une information relative à une modification du coût unitaire du RB. Cette information peut être la nouvelle valeur du coût unitaire du RB, ou la valeur d'un surcoût par rapport au coût unitaire standard du RB. Cette réponse peut être transportée dans un message utilisant un protocole quelconque, par exemple une requête http avec un corps XML comprenant un paramètre <price RB>.

De façon similaire, lors d'une étape C5b, le serveur de contrôle 200 émet une réponse de réservation également vers le serveur de contenu 300b, comprenant la même information relative à la modification du coût unitaire du RB.

Lors d'une étape C6a, le serveur de contenu 300a détermine un nouveau nombre de blocs RB à réserver, NC1a, auprès du serveur de contrôle 200, en fonction des paramètres liés au contenu demandé et en fonction de paramètres liés au terminal, comme lors de l'étape E1a, à la différence que dans cette étape C6a, le serveur de contenu 300a détermine ce nouveau nombre de blocs à réserver également en fonction de la valeur du coût unitaire modifié du RB, reçue lors de l'étape C5a. Même si un coût par RB augmenté par le serveur de contrôle 200 est fait avec l'objectif d'inciter le serveur de contenu 300a à diminuer le nombre de RB dont il demande la réservation, il peut décider de maintenir le même nombre, par exemple parce qu'il a obtenu une indication que la mémoire tampon du terminal 100a est vide ou presque vide. Aussi, si par exemple le serveur de contenu 300a sert des flux distincts à plusieurs terminaux dans le même réseau d'accès mobile (la même cellule), et pas seulement au terminal 100a, il peut décider de diminuer le nombre de RB dont il demande la réservation pour une partie des terminaux, et de le maintenir pour certains terminaux privilégiés, tout en diminuant le nombre total pour l'ensemble des terminaux qu'il sert.

De façon similaire, lors d'une étape C6b, le serveur de contenu 300b détermine un nouveau nombre de blocs RB, NC1b, à réserver auprès du serveur de contrôle 200.

Lors d'une étape C7a, le serveur de contenu 300a émet une deuxième demande de réservation pour un nombre de blocs égal à NC1a, à destination du serveur de contrôle 200.

De façon similaire, lors d'une étape C7b, le serveur de contenu 300a émet une deuxième demande de réservation pour un nombre de blocs égal à NC1b, à destination du serveur de contrôle 200. Cette deuxième demande peut être transportée dans un message utilisant un protocole quelconque, par exemple une requête http avec un corps XML comprenant un paramètre <revised RB>.

Lors d'une étape C8, le serveur de contrôle 200, ayant reçu les deuxièmes demandes de réservation des serveurs de contenu 300a et 300b, calcule un écart entre Ndis, le nombre de blocs disponibles, et la somme des blocs demandés en réservation, c'est-à-dire NC1a+NC1b.

Si cet écart est petit, par exemple inférieur ou égal au seuil S déterminé, le serveur de contrôle 200 décide de sortir du cycle C de négociation et de mettre en œuvre l'étape E4 déjà décrite, c'est-à-dire d'allouer à chacun des serveurs de contenu 300a et 300b un nombre proche ou égal aux nombres de blocs RB qu'ils ont demandés (respectivement NC1a et NC1b).

Lors de l'étape E4, particulièrement lorsqu'elle est effectuée après au moins une itération du cycle C, il est avantageux que le serveur de contrôle 200 mémorise le nombre de blocs alloués à chacun des serveurs de contenus ainsi que le coût unitaire par bloc RB utilisé, pour des fins de facturation ultérieure aux opérateurs gérant les serveurs de contenu.

Si par contre l'écart calculé lors de l'étape C8 est grand, par exemple supérieur au seuil S, le serveur de contrôle 200 décide alors de rester dans le cycle C de négociation, en mettant en œuvre une nouvelle fois toutes les étapes du cycle C, de l'étape C4 jusqu'à l'étape C8.

Si l'écart reste grand après plusieurs itérations du cycle C de négociation, une autre condition pour sortir du cycle peut être un temps maximum écoulé depuis la première itération, ou un nombre maximum de d'itérations, autrement dit l'atteinte d'une limite au nombre de deuxièmes demandes de réservation que peuvent émettre les serveurs de contenu.

Suite à l'étape E4 de détermination de nombres de blocs RB alloués, le serveur de contrôle 200 en informe les serveurs de contenu.

Lors d'une étape E5a, le serveur de contrôle 200 émet une réponse d'allocation au serveur 300a comprenant une information relative au nombre de blocs RB qui sont alloués pour la transmission des données du serveur 300a par la station de base 100 vers le terminal 100a. Cette réponse peut être transportée dans un message utilisant un protocole quelconque, par exemple une requête http avec un corps XML comprenant un paramètre <allocated RB>.

De façon similaire, lors d'une étape E5b, le serveur de contrôle 200 émet une réponse d'allocation au serveur 300b comprenant une information relative au nombre de blocs RB qui sont alloués pour la transmission des données du serveur 300b par la station de base 100 vers le terminal 100b.

Lors d'une étape E6a, le serveur de contenu 300a détermine en fonction du nombre de RB alloués le volume de données faisant partie d'un flux, ou morceaux de flux, qu'il devra transférer à la station de base 100 pour qu'elle l'émette vers le terminal 100a. Cette détermination est l'opération inverse de l'étape E1a, où le serveur 300a déterminait un nombre de RB en fonction de paramètres liés au flux de données.

De façon similaire, lors d'une étape E6b, le serveur de contenu 300b détermine en fonction du nombre de RB alloués la taille d'un morceau de flux.

Lors d'une étape E300a connue, en réponse à la requête pour un contenu multimédia émanant du terminal 100a émise lors de l'étape E100a, le serveur de contenu 300a émet son morceau de flux vers le terminal 100a au travers de la station de base 100.

De façon similaire, lors d'une étape E300b connue, en réponse à la requête pour un contenu multimédia émanant du terminal 100b émise lors de l'étape E100b, le serveur de contenu 300b émet son morceau de flux vers le terminal 100b au travers de la station de base 100.

En relation avec la **figure 3****,** on présente maintenant un exemple de structure d'un dispositif de réservation de blocs de ressource physique d'un réseau d'accès mobile, selon un aspect de l'invention.

Le dispositif 300 de réservation de blocs de ressource physique d'un réseau d'accès mobile met en œuvre le procédé de réservation de blocs de ressource physique d'un réseau d'accès mobile, dont différents modes de réalisation viennent d'être décrits.

Un tel dispositif 300 peut être mis en œuvre dans un serveur de contenu, un serveur de cache, ou tout autre serveur apte émettre des flux de données multimédia vers des terminaux mobile.

Par exemple, le dispositif 300 comprend une unité de traitement 330, équipée par exemple d'un microprocesseur µP, et pilotée par un programme d'ordinateur 310, stocké dans une mémoire 320 et mettant en œuvre le procédé de réservation selon l'invention. A l'initialisation, les instructions de code du programme d'ordinateur 310 sont par exemple chargées dans une mémoire RAM, avant d'être exécutées par le processeur de l'unité de traitement 330.

Le dispositif 300 comprend également :
- un module 301 de détermination, apte à, et configuré pour déterminer un nombre de blocs de ressource à réserver, en fonction de paramètres liés à un flux de données entre le dispositif 300 et un terminal mobile, et d'un niveau de qualité d'une connexion d'un terminal à un réseau d'accès mobile,
- un émetteur 302 apte à, et configuré pour émettre une première demande de réservation de blocs de ressource (ResReq), comprenant une valeur d'un nombre de blocs déterminée par le dispositif 300, vers une entité de contrôle du réseau d'accès mobile,
- un récepteur 303 apte à, et configuré pour recevoir une réponse d'allocation de blocs de ressource en provenance de l'entité de contrôle (AllocRep), comprenant une valeur d'un nombre de blocs alloués au flux.

Avantageusement, le module 301 est également apte à, et configuré pour prendre en compte un coût unitaire par bloc de ressource.

Avantageusement, le récepteur 303 est également apte à, et configuré pour recevoir une réponse de réservation (ResRep), comprenant un paramètre relatif à un coût unitaire d'un bloc de ressource.

Avantageusement, l'émetteur 302 est également apte à, et configuré pour émettre une deuxième demande de réservation de blocs de ressource (ResReq), comprenant une valeur révisée d'un nombre de blocs à réserver, déterminé au moins en fonction du coût unitaire d'un bloc de ressource.

En relation avec la **figure 4****,** on présente maintenant un exemple de structure d'un dispositif d'allocation de blocs de ressource physique d'un réseau d'accès mobile, selon un aspect de l'invention.

Le dispositif 200 d'allocation de blocs de ressource physique d'un réseau d'accès mobile met en œuvre le procédé d'allocation de blocs de ressource physique d'un réseau d'accès mobile, dont différents modes de réalisation viennent d'être décrits.

Un tel dispositif 200 peut être mis en œuvre dans un serveur de contrôle, connecté à une station de base et apte à gérer le trafic de, et vers, des terminaux mobiles, ainsi qu'à accéder à des informations en temps réel sur le fonctionnement de la partie radio de la station de base. Ce serveur de contrôle est par exemple de type MEC (Mobile Edge Computing).

Par exemple, le dispositif 200 comprend une unité de traitement 230, équipée par exemple d'un microprocesseur µP, et pilotée par un programme d'ordinateur 210, stocké dans une mémoire 220 et mettant en œuvre le procédé de réservation selon l'invention. A l'initialisation, les instructions de code du programme d'ordinateur 210 sont par exemple chargées dans une mémoire RAM, avant d'être exécutées par le processeur de l'unité de traitement 230.

Le dispositif 200 comprend également :
- un récepteur 201 apte à, et configuré pour recevoir des demandes de réservation de blocs de ressource (ResReq), comprenant une valeur d'un nombre de blocs demandé par des serveurs de contenu,
- un module 202 de calcul, apte à, et configuré pour calculer un écart entre un nombre de blocs disponibles dans le réseau d'accès mobile, et le total des nombres de blocs demandés,
- un module 203 de détermination, apte à, et configuré pour déterminer au moins en fonction de l'écart calculé, des valeurs de nombres de blocs alloués aux serveurs de contenus,
- un émetteur 204 apte à, et configuré pour émettre des réponses d'allocation de blocs de ressource (AllocRep), comprenant des valeurs de nombres de blocs qui sont alloués aux serveurs de contenu.

Avantageusement, le dispositif 200 comprend également un module 205 d'ajustement, apte à, et configuré pour ajustement du coût unitaire au moins en fonction de l'écart.

Avantageusement, l'émetteur 204 est également apte à, et configuré pour émettre des réponses de réservation vers les serveurs de contenu (ResRep), comprenant une information relative au coût unitaire.

Les modules décrits en relation avec les figures 3 et 4 peuvent être matériels ou logiciels.

Ces figures 3 et 4 illustrent seulement une manière particulière, parmi plusieurs possibles, de réaliser les procédés détaillés ci-dessus, en relation avec les figures 1 et 2. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les exemples de réalisation de l'invention qui viennent d'être présentés ne sont que quelques-uns des modes de réalisation envisageables. Ils montrent que l'invention permet d'obtenir une consommation optimale des ressources radio du réseau d'accès mobile, sans que les fournisseurs de contenus ne partagent, ni entre eux, ni avec les opérateurs de réseaux d'accès mobile, les informations qu'ils détiennent sur leurs utilisateurs et la façon dont ceux-ci consomment leurs contenus.

## Revendications

1. **Procédé** de réservation de blocs de ressource physique d'un réseau d'accès mobile (MAN), mis en œuvre par un serveur de contenu (300a, 300b) configuré pour émettre un flux de données demandé par un terminal (100a, 100b) connecté au réseau d'accès mobile avec un niveau de qualité déterminé, le procédé comprenant :
• détermination (E1a, E1b; C6a, C6b) d'une valeur d'un nombre de blocs à réserver, en fonction de paramètres liés au flux de données, du niveau de qualité déterminé, et d'un coût unitaire par bloc,
• émission (E2a, E2b; C7a, C7b) d'une demande de réservation de blocs de ressource, comprenant la valeur déterminée du nombre de blocs à réserver, vers une entité de contrôle (200) du réseau d'accès mobile,
• réception (E5a, E5b) d'une réponse d'allocation de blocs de ressource en provenance de l'entité de contrôle, comprenant une valeur d'un nombre de blocs alloués au serveur de contenu.

2. **Procédé** de réservation selon la revendication 1, comprenant, préalablement à l'émission (C7a, C7b) de la demande de réservation :
• réception (C5a, C5b) d'une réponse de réservation en provenance de l'entité de contrôle (200), comprenant un paramètre relatif au coût unitaire d'un bloc.

3. **Procédé** d'allocation de blocs de ressource physique d'un réseau d'accès mobile (MAN), pour une pluralité de serveurs de contenu (300a, 300b) configurés pour émettre des flux de données vers des terminaux (100a, 100b) connectés au réseau d'accès mobile, le procédé étant mis en œuvre par une entité de contrôle du réseau d'accès mobile (200) et comprenant :
• réception (E2a, E2b; C7a, C7b) de demandes de réservation de blocs pour lesquels un coût unitaire par bloc est déterminé, en provenance de la pluralité de serveurs de contenu (300a, 300b), une première demande d'un serveur de contenu comprenant une valeur d'un nombre de blocs demandés par ce serveur de contenu,
• calcul (E3, C8) d'un écart entre un nombre de blocs disponibles dans le réseau d'accès mobile, et le total des nombres de blocs demandés,
• ajustement (C4) du coût unitaire au moins en fonction de l'écart,
• détermination (E4), au moins en fonction de l'écart, de valeurs de nombres de blocs alloués aux serveurs de contenus,
• émission (E5a, E5b) de réponses d'allocation de blocs vers la pluralité de serveurs de contenus, une réponse d'allocation à un serveur de contenu comprenant la valeur du nombre de blocs qui sont alloués à ce serveur de contenu.

4. **Procédé** d'allocation selon la revendication 3, où le procédé comprend en outre, préalablement à la réception (, C7a, C7b) de demandes de réservation :
• émission (C5a, C5b) de réponses de réservation vers la pluralité de serveurs de contenu, comprenant une information relative au coût unitaire.

5. **Dispositif** de réservation de blocs de ressource physique d'un réseau d'accès mobile (MAN), compris dans un serveur de contenu (300a, 300b) configuré pour émettre un flux de données demandé par un terminal (100a, 100b) connecté au réseau d'accès mobile avec un niveau de qualité déterminé, le dispositif comprenant :
• un module de détermination (301) d'une valeur d'un nombre de blocs à réserver, en fonction de paramètres liés au flux de données, du niveau de qualité déterminé, et d'un coût unitaire par bloc,
• un émetteur (302) d'une demande de réservation (ResReq) de blocs de ressource, comprenant la valeur déterminée du nombre de blocs, vers une entité de contrôle du réseau d'accès mobile,
• un récepteur (303) d'une réponse d'allocation (AllocRep) de blocs de ressource en provenance de l'entité de contrôle, comprenant une valeur d'un nombre de blocs alloués au serveur de contenu.

6. **Dispositif** de réservation selon la revendication 5, où le récepteur (303) est également apte à, et configuré pour recevoir une réponse de réservation (ResRep), comprenant un paramètre relatif au coût unitaire.

7. **Dispositif** d'allocation de blocs de ressource physique d'un réseau d'accès mobile (MAN), pour une pluralité de serveurs de contenu (300a, 300b) configurés pour émettre des flux de données vers des terminaux (100a, 100b) connectés au réseau d'accès mobile, le dispositif comprenant :
• un récepteur (201) de demandes de réservation (ResReq) de blocs, en provenance de la pluralité de serveurs de contenu, une demande d'un serveur de contenu comprenant une valeur d'un nombre de blocs demandés par ce serveur de contenu,
• un module de calcul (202) d'un écart entre un nombre de blocs disponibles dans le réseau d'accès mobile, et le total des nombres de blocs demandés,
• un module d'ajustement (205) du coût unitaire en fonction de l'écart calculé,
• un module de détermination (203), au moins en fonction de l'écart, de valeurs de nombres de blocs alloués aux serveurs de contenus,
• un émetteur (204) de réponses d'allocation de blocs vers la pluralité de serveurs de contenus, une réponse d'allocation à un serveur de contenu comprenant la valeur du nombre de blocs qui sont alloués à ce serveur de contenu.

8. **Dispositif** d'allocation selon la revendication 7, où l'émetteur (204) est en outre apte à émettre des réponses de réservation (ResRep) vers la pluralité de serveurs de contenu (300a, 300b), comprenant une information relative au coût unitaire.

9. **Système** de partage de blocs de ressource physique d'un réseau d'accès mobile (MAN), comprenant au moins deux dispositifs de réservation (300a, 300b) conforme à la revendication 5, et un dispositif d'allocation (200) conforme à la revendication 7, le dispositif d'allocation étant connecté aux dispositifs de réservation et à une station de base (100).

10. **Programme d'ordinateur**, comprenant des instructions pour la mise en œuvre des étapes du procédé de réservation de blocs de ressource physique d'un réseau d'accès mobile selon la revendication 1, lorsque ce programme est exécuté par un processeur.

11. **Support d'informations** lisible par un serveur de contenu, et comportant des instructions d'un programme d'ordinateur conforme à la revendication 10.

12. **Programme d'ordinateur,** comprenant des instructions pour la mise en œuvre des étapes du procédé d'allocation de blocs de ressource physique d'un réseau d'accès mobile selon la revendication 3, lorsque ce programme est exécuté par un processeur.

13. **Support d'informations** lisible par un serveur de contrôle connecté à une station de base, et comportant des instructions d'un programme d'ordinateur conforme à la revendication 12.

## Patentansprüche

1. Verfahren zur Reservierung physikalischer Ressourcenblöcke eines mobilen Zugangsnetzes (MAN), durchgeführt von einem Inhaltsserver (300a, 300b), der konfiguriert ist, einen von einem mit dem mobilen Zugangsnetz verbundenen Endgerät (100a, 100b) angeforderten Datenstrom mit einem bestimmten Qualitätsniveau zu senden, wobei das Verfahren enthält:
• Bestimmung (E1a, E1b; C6a, C6b) eines Werts einer Anzahl von zu reservierenden Blöcken, abhängig von mit dem Datenstrom verbundenen Parametern, vom bestimmten Qualitätsniveau und von einem Einheitspreis pro Block,
• Senden (E2a, E2b; C7a, C7b) einer Reservierungsanforderung von Ressourcenblöcken, die den bestimmten Wert der Anzahl von zu reservierenden Blöcken enthält, an eine Steuerentität (200) des mobilen Zugangsnetzes,
• Empfang (E5a, E5b) einer Zuweisungsantwort von Ressourcenblöcken von der Steuerentität, die einen Wert einer Anzahl von dem Inhaltsserver zugewiesenen Blöcken enthält.

2. Reservierungsverfahren nach Anspruch 1, das vor dem Senden (C7a, C7b) der Reservierungsanforderung enthält:
• Empfang (C5a, C5b) einer Reservierungsantwort von der Steuerentität (200), die einen Parameter bezüglich des Einheitspreises eines Blocks enthält.

3. Zuweisungsverfahren physikalischer Ressourcenblöcke eines mobilen Zugangsnetzes (MAN) für eine Vielzahl von Inhaltsservern (300a, 300b), die konfiguriert sind, Datenströme an mit dem mobilen Zugangsnetz verbundene Endgeräte (100a, 100b) zu senden, wobei das Verfahren von einer Steuerentität des mobilen Zugangsnetzes (200) durchgeführt wird und enthält:
• Empfang (E2a, E2b; C7a, C7b) von Reservierungsanforderungen von Blöcken, für die ein Einheitspreis pro Block festgelegt ist, von der Vielzahl von Inhaltsservern (300a, 300b), wobei eine erste Anforderung eines Inhaltsservers einen Wert einer Anzahl von von diesem Inhaltsserver angeforderten Blöcken enthält,
• Berechnung (E3, C8) einer Abweichung zwischen einer Anzahl von im mobilen Zugangsnetz verfügbaren Blöcken und der Gesamtheit der Anzahlen angeforderter Blöcke,
• Anpassung (C4) des Einheitspreises mindestens abhängig von der Abweichung,
• Bestimmung (E4), zumindest abhängig von der Abweichung, von Werten von Anzahlen von Blöcken, die den Inhaltsservern zugewiesen werden,
• Senden (E5a, E5b) von Zuweisungsantworten von Blöcken an die Vielzahl von Inhaltsservern, wobei eine Zuweisungsantwort an einen Inhaltsserver den Wert der Anzahl von Blöcken enthält, die diesem Inhaltsserver zugewiesen werden.

4. Zuweisungsverfahren nach Anspruch 3, wobei das Verfahren außerdem vor dem Empfang (C7a, C7b) von Reservierungsanforderungen enthält:
• Senden (C5a, C5b) von Reservierungsantworten an die Vielzahl von Inhaltsservern, die eine Information bezüglich des Einheitspreises enthalten.

5. Reservierungsvorrichtung physikalischer Ressourcenblöcke eines mobilen Zugangsnetzes (MAN), die in einem Inhaltsserver (300a, 300b) enthalten ist, der konfiguriert ist, einen von einem mit dem mobilen Zugangsnetz verbundenen Endgerät (100a, 100b) angeforderten Datenstrom mit einem bestimmten Qualitätsniveau zu senden, wobei die Vorrichtung enthält:
• ein Modul zur Bestimmung (301) eines Werts einer Anzahl von zu reservierenden Blöcken, abhängig von mit dem Datenstrom verbundenen Parametern, vom bestimmten Qualitätsniveau und von einem Einheitspreis pro Block,
• einen Sender (302) einer Reservierungsanforderung (ResReq) von Ressourcenblöcken, die den bestimmten Wert der Anzahl von Blöcken enthält, an eine Steuerentität des mobilen Zugangsnetzes,
• einen Empfänger (303) einer Zuweisungsantwort (AllocRep) von Ressourcenblöcken von der Steuerentität, die einen Wert einer Anzahl von dem Inhaltsserver zugewiesenen Blöcken enthält.

6. Reservierungsvorrichtung nach Anspruch 5, wobei der Empfänger (303) ebenfalls geeignet und konfiguriert ist, eine Reservierungsantwort (ResRep) zu empfangen, die einen Parameter bezüglich des Einheitspreises enthält.

7. Zuweisungsvorrichtung physikalischer Ressourcenblöcke eines mobilen Zugangsnetzes (MAN) für eine Vielzahl von Inhaltsservern (300a, 300b), die konfiguriert sind, Datenströme an mit dem mobilen Zugangsnetz verbundene Endgeräte (100a, 100b) zu senden, wobei die Vorrichtung enthält:
• einen Empfänger (201) von Reservierungsanforderungen (ResReq) von Blöcken von der Vielzahl von Inhaltsservern, wobei eine Anforderung eines Inhaltsservers einen Wert einer Anzahl von von diesem Inhaltsserver angeforderten Blöcken enthält,
• ein Berechnungsmodul (202) einer Abweichung zwischen einer Anzahl von im mobilen Zugangsnetz verfügbaren Blöcken und der Gesamtheit der angeforderten Anzahlen von Blöcken,
• ein Anpassungsmodul (205) des Einheitspreises abhängig von der berechneten Abweichung,
• ein Modul zur Bestimmung (203), mindestens abhängig von der Abweichung, von Werten von Anzahlen von Blöcken, die den Inhaltsservern zugewiesen sind,
• einen Sender (204) von Zuweisungsantworten von Blöcken an die Vielzahl von Inhaltsservern, wobei eine Zuweisungsantwort an einen Inhaltsserver den Wert der Anzahl von Blöcken enthält, die diesem Inhaltsserver zugewiesen werden.

8. Zuweisungsvorrichtung nach Anspruch 7, wobei der Sender (204) außerdem geeignet ist, Reservierungsantworten (ResRep) an die Vielzahl von Inhaltsservern (300a, 300b) zu senden, die eine Information bezüglich des Einheitspreises enthalten.

9. System zur gemeinsamen Nutzung physikalischer Ressourcenblöcke eines mobilen Zugangsnetzes (MAN), das mindestens zwei Reservierungsvorrichtungen (300a, 300b) gemäß Anspruch 5 und eine Zuweisungsvorrichtung (200) gemäß Anspruch 7 enthält, wobei die Zuweisungsvorrichtung mit den Reservierungsvorrichtungen und mit einer Basisstation (100) verbunden ist.

10. Computerprogramm, das Anweisungen zur Durchführung der Schritte des Reservierungsverfahrens physikalischer Ressourcenblöcke eines mobilen Zugangsnetzes nach Anspruch 1 enthält, wenn dieses Programm von einem Prozessor ausgeführt wird.

11. Informationsträger, der von einem Inhaltsserver lesbar ist und Anweisungen eines Computerprogramms gemäß Anspruch 10 aufweist.

12. Computerprogramm, das Anweisungen zur Durchführung der Schritte des Zuweisungsverfahrens physikalischer Ressourcenblöcke eines mobilen Zugangsnetzes nach Anspruch 3 enthält, wenn dieses Programm von einem Prozessor ausgeführt wird.

13. Informationsträger, der von einem mit einer Basisstation verbundenen Steuerserver gelesen werden kann und Anweisungen eines Computerprogramms gemäß Anspruch 12 aufweist.

## Claims

1. Method for reserving physical resource blocks of a mobile access network (MAN), implemented by a content server (300a, 300b) configured to transmit a data stream requested by a terminal (100a, 100b) connected to the mobile access network with a determined quality level, the method comprising:
• determination (E1a, E1b; C6a, C6b) of a value of a number of blocks to be reserved, as a function of parameters related to the data stream, of the determined quality level, and of a unit cost per block,
• transmission (E2a, E2b; C7a, C7b) of a resource block reservation request, comprising the determined value of the number of blocks to be reserved, to a control entity (200) of the mobile access network,
• reception (E5a, E5b) of a resource block allocation response from the control entity, comprising a value of a number of blocks allocated to the content server.

2. Reservation method according to Claim 1, comprising, prior to the transmission (C7a, C7b) of the reservation request:
• reception (C5a, C5b) of a reservation response from the control entity (200), comprising a parameter relating to the unit cost of a block.

3. Method for allocating physical resource blocks of a mobile access network (MAN), for a plurality of content servers (300a, 300b) configured to transmit data streams to terminals (100a, 100b) connected to the mobile access network, the method being implemented by a control entity of the mobile access network (200) and comprising:
• reception (E2a, E2b; C7a, C7b) of block reservation requests for which a unit cost per block is determined, from the plurality of content servers (300a, 300b), a first request from a content server comprising a value of a number of blocks requested by this content server,
• calculation (E3, C8) of a disparity between a number of blocks available in the mobile access network and the total of the numbers of blocks requested,
• adjustment (C4) of the unit cost at least as a function of the disparity,
• determination (E4), at least as a function of the disparity, of values of numbers of blocks allocated to the content servers,
• transmission (E5a, E5b) of block allocation responses to the plurality of content servers, an allocation response to a content server comprising the value of the number of blocks that are allocated to this content server.

4. Allocation method according to Claim 3, wherein the method furthermore comprises, prior to the reception (C7a, C7b) of reservation requests:
• transmission (C5a, C5b) of reservation responses to the plurality of content servers, comprising an item of information relating to the unit cost.

5. Device for reserving physical resource blocks of a mobile access network (MAN), included in a content server (300a, 300b) configured to transmit a data stream requested by a terminal (100a, 100b) connected to the mobile access network with a determined quality level, the device comprising:
• a determination module (301) for determining a value of a number of blocks to be reserved, as a function of parameters related to the data stream, of the determined quality level, and of a unit cost per block,
• a transmitter (302) for transmitting a resource block reservation request (ResReq), comprising the determined value of the number of blocks, to a control entity of the mobile access network,
• a receiver (303) for receiving a resource block allocation response (AllocRep) from the control entity, comprising a value of a number of blocks allocated to the content server.

6. Reservation device according to Claim 5, wherein the receiver (303) is also able to and configured to receive a reservation response (ResRep), comprising a parameter relating to the unit cost.

7. Device for allocating physical resource blocks of a mobile access network (MAN), for a plurality of content servers (300a, 300b) configured to transmit data streams to terminals (100a, 100b) connected to the mobile access network, the device comprising:
• a receiver (201) for receiving block reservation requests (ResReq) from the plurality of content servers, a request from a content server comprising a value of a number of blocks requested by this content server,
• a calculation module (202) for calculating a disparity between a number of blocks available in the mobile access network and the total of the numbers of blocks requested,
• an adjustment module (205) for adjusting the unit cost as a function of the calculated disparity,
• a determination module (203) for determining, at least as a function of the disparity, values of numbers of blocks allocated to the content servers,
• a transmitter (204) for transmitting block allocation responses to the plurality of content servers, an allocation response to a content server comprising the value of the number of blocks that are allocated to this content server.

8. Allocation device according to Claim 7, wherein the transmitter (204) is furthermore able to transmit reservation responses (ResRep) to the plurality of content servers (300a, 300b), comprising an item of information relating to the unit cost.

9. System for sharing physical resource blocks of a mobile access network (MAN), comprising at least two reservation devices (300a, 300b) according to Claim 5, and an allocation device (200) according to Claim 7, the allocation device being connected to the reservation devices and to a base station (100).

10. Computer program, comprising instructions for the implementation of the steps of the method for reserving physical resource blocks of a mobile access network according to Claim 1 when this program is executed by a processor.

11. Information medium able to be read by a content server and comprising instructions of a computer program according to Claim 10.

12. Computer program, comprising instructions for the implementation of the steps of the method for allocating physical resource blocks of a mobile access network according to Claim 3 when this program is executed by a processor.

13. Information medium able to be read by a control server connected to a base station and comprising instructions of a computer program according to Claim 12.
